# EUROPÄISCHE PATENTSCHRIFT

(11) **EP 3 319 003 B1**
(45) Veröffentlichungstag und Bekanntmachung des Hinweises auf die Patenterteilung: **16.09.2020**
(21) Anmeldenummer: 17201415.1
(22) Anmeldetag: 11.01.2017
(51) Int. Cl.: G06F 21/44, G06F 21/35

(54) **VERFAHREN UND SYSTEM ZUR AUTHENTIFIZIERUNG EINES MOBILEN TELEKOMMUNIKATIONSENDGERÄTS AN EINEM DIENST-COMPUTERSYSTEM UND MOBILES TELEKOMMUNIKATIONSENDGERÄT**
METHOD AND SYSTEM FOR AUTHENTICATING A MOBILE TELECOMMUNICATION TERMINAL ON A SERVICE COMPUTER SYSTEM AND MOBILE TELECOMMUNICATION TERMINAL
PROCÉDÉ ET SYSTÈME D'AUTHENTIFICATION D'UN APPAREIL DE TÉLÉCOMMUNICATION MOBILE SUR UN SYSTÈME INFORMATIQUE DE SERVICE ET APPAREIL DE TÉLÉCOMMUNICATION MOBILE

(30) Priorität: 15.02.2016 DE 102016202262
(43) Veröffentlichungstag der Anmeldung: 09.05.2018
(62) Teilanmeldung aus: 17150994.6
(73) Patentinhaber: Bundesdruckerei GmbH, 10969 Berlin (DE)
(72) Erfinder: MATEJEK, Ulrich, 12157 Berlin (DE)
(74) Vertreter: Richardt Patentanwälte PartG mbB

(56) Entgegenhaltungen:
- DE-A1-102011 082 101
- US-A1- 2012 323 717
- US-A1- 2013 179 692

## Beschreibung

Die vorliegende Patentanmeldung ist eine Teilanmeldung zur Stammanmeldung EP 17150994.6, deren Offenbarungsgehalt vollumfänglich zum Gegenstand der vorliegenden Teilanmeldung gemacht wird.

Die Erfindung betrifft ein Verfahren zur Authentifizierung eines mobilen Telekommunikationsendgeräts an einem Dienst-Computersystem, ein mobiles Telekommunikationsendgerät sowie ein System zur Durchführung eines solches Verfahrens.

Mobile Telekommunikationsendgeräte werden häufig mit einem Konto eines OnlineDienstes verknüpft, um über das mobile Telekommunikationsendgerät auf den Dienst zugreifen zu können. Auf dem mobilen Telekommunikationsendgerät ist beispielsweise ein Programm gespeichert, über das eine Verbindung zu einem Dienst-Computersystem des Onlinedienstes aufgebaut werden kann. Beispielsweise kann der Onlinedienst ein Onlineshop oder ein anderer Dienstanbieter sein.

Auf dem mobilen Telekommunikationsendgerät können des Weiteren abgeleitete elektronische Identitäten des Nutzers gespeichert sein, wobei die elektronischen Identitäten insbesondere in einem gesicherten Speicherbereich gespeichert sind.

Wird ein mobiles Telekommunikationsendgerät mit einem Online-Dienst verbunden oder soll eine abgeleitete Identität auf dem mobilen Telekommunikationsendgerät gespeichert werden, muss zuvor sichergestellt werden, dass sich das mobile Telekommunikationsendgerät im Besitz des rechtmäßigen Besitzers der originalen elektronischen Identität befindet.

Hierzu ist es bekannt, dass der Nutzer seine Zugangsdaten, beispielsweise Nutzername und Passwort, die der Nutzer bei einer vorherigen Registrierung am Dienst-Computersystem erhalten hat, in ein Programm des mobilen Telekommunikationsendgeräts eingibt. Das Programm sendet diese Informationen an das Dienst-Computersystem. Stimmen die Zugangsdaten mit den im Dienst-Computersystem gespeicherten Zugangsdaten überein, gilt das mobile Telekommunikationsendgerät als authentifiziert.

Alternativ kann der Nutzer mit dem mobilen Telekommunikationsendgerät einen Barcode abfotografieren, der dem Nutzer nach einer Anmeldung mit einem Nutzername und einem Passwort oder einer zwei-Faktor-Authentifizierung an einem Nutzercomputersystem angezeigt wird. Mit den im Barcode enthaltenen Informationen kann sich das mobile Telekommunikationsendgerät gegenüber dem Dienst-Computersystem authentifizieren. Anschließend können gegebenenfalls sicherere länger gültige Authentifizierungsdaten ausgetauscht werden, die im mobilen Telekommunikationsendgerät gespeichert werden können.

Statt eines Barcodes ist beispielsweise auch eine Authentifizierung mittels mTAN bekannt, bei der eine Kurznachricht mit einem Code an das mobile Telekommunikationsendgerät des Nutzers gesendet wird. Dieses Verfahren soll sogenannte "Man-in-the-middle-Angriffe" verhindern oder zumindest erschweren, bei denen während des Anmeldevorgangs versucht wird, ein anderes mobiles Telekommunikationsendgerät als das des Nutzers mit dem Dienst-Computersystem zu verknüpfen.

Nutzernamen und Passwörter können aber ausgespäht, erraten oder durch Ausprobieren herausgefunden werden. Eine Zwei-Faktor-Authentifizierung, beispielsweise mittels eines elektronischen Personalausweises, die eine höhere Sicherheit bieten würde, ist mit einem mobilen Telekommunikationsendgerät aber nicht möglich, da herkömmliche Telekommunikationsendgeräte nicht in der Lage sind, einen elektronischen Personalausweises auszulesen. Beispielsweise verfügen mobile Telekommunikationsendgeräte nicht über die entsprechenden Schnittstellen. Wird ein Barcode verwendet, beispielsweise zur Übertragung der initialen Authentifizierungsdaten, muss sichergestellt werden, dass Dritte keine Kenntnis von diesem Barcode erlangen können.

Die DE 10 2011 082 101 A1 beschreibt ein Verfahren zur Erzeugung eines Soft-Tokens mit folgenden Schritten: zur Verfügungstellung eines Secure Elements, wobei in einem geschützten Speicherbereich des Secure Elements ein geheimer Schlüssel eines ersten asymmetrischen kryptografischen Schlüsselpaars gespeichert ist; Aufbau einer ersten kryptografisch gesicherten Verbindung zwischen einem elektronischen Gerät und einem Dienst-Computersystem; Übertragung einer Anforderung zur Erzeugung des Soft-Tokens von dem elektronischen Gerät an das Dienst-Computersystem über die erste Verbindung; Erzeugung eines One Time Password aufgrund des Empfangs der Anforderung durch das Dienst-Computersystem; Registrierung des One Time Passwords als Identifikator der ersten Verbindung durch das Dienst-Computersystem; Übertragung des One Time Password von dem Dienst-Computersystem an das elektronische Gerät über die erste Verbindung; Ausgabe des One Time Password über eine Nutzer-Schnittstelle des elektronischen Geräts; Aufbau einer zweiten kryptografisch gesicherten Verbindung zwischen einem Nutzer-Computersystem und dem Dienst-Computersystem; Eingabe des One Time Passwords in das Nutzer-Computersystem; Übertragung des eingegebenen One Time Passwords von dem Nutzer-Computersystem an das Dienst-Computersystem über die zweite Verbindung; Prüfung durch das Dienst-Computersystem, ob das registrierte One Time Password mit dem über die zweite Verbindung empfangenen One Time Password übereinstimmt. Nur wenn dies der Fall ist: Lesen von zumindest einem in einem ID-Token gespeicherten Attribut; Erzeugung des Soft-Tokens durch Signierung des zumindest einen Attributs und des öffentlichen Schlüssels des ersten kryptografischen Schlüsselpaars; Übertragung des Soft-Tokens über die erste Verbindung an das elektronische Gerät und/oder Übertragung des Soft-Tokens über die zweite Verbindung an das Nutzer-Computersystem.

Die US 2013/179692 A1 beschreibt ein System und Verfahren zur Drei-Faktor-Authentifizierung. Diese umfassen ein Empfangen einer Nutzeridentifikation und eines Passworts, die von dem mobilen Gerät des Nutzers gesendet werden, ein Erzeugen eines Einmalpassworts (OTP), ein Verschlüsseln des OTP und Verschlüsseln des verschlüsselten OTP in einem zweidimensionalen Strichcode. Der zweidimensionale Barcode des verschlüsselten OTP wird an ein Computergerät des Nutzers übertragen, und ein Bild des zweidimensionalen Barcodes des verschlüsselten OTP, das auf dem Computergerät des Nutzers angezeigt wird, wird unter Verwendung des mobilen Geräts des Nutzers erfasst. Der zweidimensionale Barcode des verschlüsselten OTP wird unter Verwendung des Mobilgeräts des Nutzers dekodiert, um das verschlüsselte OTP zu erhalten. Das verschlüsselte OTP wird mit dem Mobilgerät des Nutzers entschlüsselt und angezeigt. Das OTP wird dann vom Nutzer gesprochen, und die Stimme des Nutzers und das OTP werden erkannt, um den Nutzer zu authentifizieren.

Aufgabe der Erfindung ist es, ein Verfahren zur Authentifizierung eines mobilen Telekommunikationsendgeräts an einem Dienst-Computersystem bereitzustellen, das eine erhöhte Sicherheit der Authentifizierung bereitstellt. Aufgabe der Erfindung ist es des Weiteren, ein System sowie ein mobiles Telekommunikationsendgerät für ein solches Verfahren bereitzustellen.

Die der Erfindung zugrunde liegenden Aufgaben werden mit den Merkmalen der unabhängigen Patentansprüche gelöst. Ausführungsformen der Erfindung sind in den abhängigen Ansprüchen angegeben.

Ausführungsformen der Erfindung sind besonders vorteilhaft, da eine verbesserte Sicherheit bei der Authentifizierung des mobilen Telekommunikationsendgerätes erzielt werden kann. Zur Erstellung des Authentifizierungsschlüssels sind beide Authentifizierungscodes erforderlich, wobei der erste Authentifizierungscode bereits im mobilen Telekommunikationsendgerät gespeichert ist bzw. vorab übermittelt wurde und nur der zweite Authentifizierungscode bei der Anmeldung übermittelt wird. Der erste Authentifizierungscode kann beispielsweise in einer sicheren Umgebung auf dem mobilen Telekommunikationsendgerät gespeichert werden, so dass ein Ausspähen des ersten Authentifizierungscodes während des Authentifizierungsvorganges ausgeschlossen werden kann.

Zur Erzeugung des Authentifizierungsschlüssels, der zum Authentifizieren des mobilen Telekommunikationsendgerätes benötigt wird, ist die Kenntnis beider Authentifizierungscodes sowie des Verfahrens zur Erzeugung des Authentifizierungsschlüssels aus den beiden Authentifizierungscodes erforderlich. Da aber bei der Authentifizierung des mobilen Telekommunikationsendgerätes lediglich der zweite Authentifizierungscode übermittelt wird, kann auch bei einem Ausspähen oder einem Man-in the-middle-Angriff keine Verbindung zwischen einem anderen Telekommunikationsendgerät und dem Dienst-Computersystem hergestellt werden. Hierfür wäre zusätzlich die Kenntnis des ersten, im mobilen Telekommunikationsendgerät des Nutzers gespeicherten Authentifizierungscodes sowie des Verfahrens zur Erzeugung des Authentifizierungsschlüssels aus den beiden Authentifizierungscodes erforderlich. Der Nutzer muss also im Besitz seines mobilen Telekommunikationsendgerätes und des zweiten Authentifizierungscodes sein.

Zudem erfolgt durch das Anzeigen und optische Erfassen des zweiten Authentifizierungscodes ein erster Medienbruch, der ein Ausspähen zusätzlich erschwert.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Verfügungstellung einer eCommerce- oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "mobilen Telekommunikationsendgerät" wird hier ein tragbares, batteriegetriebenes Gerät mit einer Mobilfunk-Schnittstelle verstanden, insbesondere ein Mobiltelefon, ein Smartphone oder ein portabler Computer, wie zum Beispiel ein Laptop, Notebook oder Tablet-PC mit einer Mobilfunk-Schnittstelle. Das Telekommunikationsendgerät kann neben der Mobilfunk-Schnittstelle ein oder mehrere weitere Kommunikations-Schnittstellen für die drahtlose Kommunikation aufweisen, wie zum Beispiel eine Bluetooth- und/oder eine WLAN-Schnittstelle.

Unter einem "öffentlichen Netzwerk" wird hier jede Art von Telekommunikationsnetzwerk verstanden, in die sich das Nutzercomputersystem, insbesondere das Telekommunikationsendgerät, mit einer Schnittstelle einwählen kann. Insbesondere umfasst dieser Begriff Telekommunikationsnetzwerke, welche nach einem Mobilfunkstandard, wie zum Beispiel einem GSM-, UMTS-, CDMA- oder einem LTE-Standard arbeiten. Des Weiteren sind Kommunikationsnetzwerke wie kabelgebundene Internetnetzwerke, Wireless-LAN-Netzwerke oder Verbindungen über Bluetooth oder eine andere Schnittstelle des Telekommunikationsendgerätes möglich.

Über ein solches Kommunikationsnetzwerk kann beispielsweise eine Verbindung mit dem Internet hergestellt werden. Alternativ kann die Verbindung unmittelbar über ein WLAN-Netzwerk, eine Bluetooth-Verbindung oder eine andere Nahbereichsverbindung aufgebaut werden.

Nach Ausführungsformen der Erfindung weist das mobile Telekommunikationsendgerät einen gesicherten Speicherbereich auf, in dem ein erster Authentifizierungscode gespeichert ist. Im Dienstcomputersystem ist ein zweiter Authentifizierungscode gespeichert. wobei der zweite Authentifizierungscode einer Nutzerkennung zugeordnet. Das Verfahren weist die folgenden Schritte auf:
- Aufbau einer Netzwerkverbindung zwischen einen Nutzercomputersystem und einem Dienstcomputersystem über das öffentliches Netzwerk,
- Authentifizieren des Nutzers gegenüber dem Dienstcomputersystem über das Nutzercomputersystem und die Netzwerkverbindung, insbesondere mit einer 2-Faktor-Authentifizierung, wobei eine Nutzerkennung vom Nutzer-Computersystem (106) an das Dienst-Computersystem (104) über die Netzwerkverbindung gesendet wird,
- Senden des der Nutzerkennung zugeordneten zweiten Authentifizierungscodes an das Nutzercomputersystem über die Netzwerkverbindung,
- Anzeige des zweiten Authentifizierungscodes an einem Bildschirm des Nutzercomputersystems,
- Authentifizieren des Nutzers gegenüber dem mobilen Telekommunikationsendgerät durch Erfassung von nutzerspezifischen Informationen,
- Optisches Erfassen des zweiten Authentifizierungscodes durch das mobile Telekommunikationsendgeräts vom Nutzercomputersystem,
- Erzeugen eines Authentifizierungsschlüssels aus dem ersten und dem zweiten Authentifizierungscode durch das mobile Telekommunikationsendgerät,
- Aufbau einer Mobilfunkverbindung zwischen dem mobilen Telekommunikationsendgerät und dem Dienst-Computersystem über das öffentliches Netzwerk,
- Authentifizierung des mobilen Telekommunikationsendgeräts gegenüber dem Dienstcomputersystem mittels des Authentifizierungsschlüssels über die Mobilfunkverbindung.

Nach Ausführungsformen der Erfindung erfolgen vorab folgende Schritte:
- Registrierung des Nutzer an dem Dienst-Computersystem,
- Speicherung von Registrierungsdaten, wobei die Registrierungsdaten eine Nutzerkennung enthalten,
- Erstellen des Authentifizierungsschlüssels sowie des ersten und des zweiten Authentifizierungscodes,
- Speichern des zweiten Authentifizierungscodes und des Authentifizierungsschlüssels oder des ersten und des zweiten Authentifizierungscodes in einem Speicher des Dienst-Computersystem, wobei der zweite Authentifizierungscode und der Authentifizierungsschlüssel bzw. der erste und der zweite Authentifizierungscode der Nutzerkennung zugeordnet sind,
- Aufbringen des ersten Authentifizierungscodes in einer optisch lesbaren Form auf einen Träger,
- Senden des Träger an den Nutzer,
- Speicher eines Anwendungsprogramms auf dem mobilen Telekommunikationsendgerät, wobei das Anwendungsprogramm Programminstruktionen enthält, wobei die Programminstruktionen zum Empfangen und Speichern des ersten und des zweiten Authentifizierungscodes sowie zum Erzeugen des Authentifizierungsschlüssels aus dem ersten und dem zweiten Authentifizierungscode ausgebildet sind,
- Speichern des ersten Authentifizierungscodes in einem gesicherten Speicherbereich des mobilen Telekommunikationsendgeräts.

Das Versenden des ersten Authentifizierungscodes erfolgt physisch, d.h. per Brief, oder über einen anderen physischen Träger, der an die Adresse des Nutzers gesendet wird. Der erste und der zweite Authentifizierungscode werden also über verschiedene Übermittlungswege und insbesondere zu verschiedenen Zeitpunkten übermittelt, wodurch ein Abfangen und Ausspähen beider Authentifizierungscodes erschwert wird. Der erste Authentifizierungscode wird beispielsweise unmittelbar nach der Registrierung des Nutzers versendet. Der zweite Authentifizierungscode wird erst versendet bzw. angezeigt, wenn erstmalig ein Verbindungsaufbau zwischen einem mobilen Telekommunikationsendgerät und dem Dienst-Computersystem erwünscht ist.

Durch das Versenden des Trägers und das Speichern des ersten Authentifizierungscodes im mobilen Telekommunikationsendgerät erfolgt ein zweiter Medienbruch. Es erfolgt also sowohl beim Übermitteln des ersten wie auch beim Übermitteln des zweiten Authentifizierungscode jeweils ein Medienbruch, wobei der Medienbruch jeweils zwischen unterschiedlichen Medien erfolgt, nämlich im Fall des ersten Authentifizierungscodes durch die Anzeige auf dem Nutzercomputersystem und das optische Erfassen durch das mobilen Telekommunikationsendgerät im Fall des zweiten Authentifizierungscodes durch das Versenden des Träger und das anschließende Erfassen durch das mobilen Telekommunikationsendgerät und. Durch die unterschiedlichen Medienbrüche ist die Sicherheit zusätzlich erhöht.

Der Authentifizierungsschlüssel kann im Dienst-Computersystem persistent gespeichert werden. In dieser Ausführungsform muss für die Authentifizierung des mobilen Telekommunikationsendgeräts gegenüber dem Dienst-Computersystem mittels des Authentifizierungsschlüssels nur der im Dienst-Computersystem gespeicherte Authentifizierungsschlüssel abgerufen werden. Alternativ können der erste und der zweite Authentifizierungscode im Dienst-Computersystem gespeichert werden und der Authentifizierungsschlüssel wird erst nach dem Empfang einer Authentifizierungsanfrage vom Dienst-Computersystem aus den beiden Authentifizierungscodes ermittelt und nur temporär gespeichert.

Um sicherzustellen, dass der Träger mit dem ersten Authentifizierungscode ausschließlich an den Nutzer gesendet wird, kann bei der Registrierung eine Authentifizierung des Nutzers gegenüber dem Dienst-Computersystem erfolgen. Dies kann beispielsweise mittels eines dem Nutzer zugeordneten ID-Tokens erfolgen, wobei der ID-Token einen nichtflüchtigen elektronischen Speicher mit einem geschützten Speicherbereich aufweist, in dem Attribute gespeichert sind, wobei ein Zugriff auf den geschützten Speicherbereich nur über einen Prozessor des ID-Tokens möglich ist, und wobei der ID-Token eine Kommunikationsschnittstelle zur Kommunikation mit einem Lesegerät eines Nutzer-Computersystems aufweist. Das Verfahren weist die folgenden Schritte auf:
- Senden einer Registrierungsanfrage des Nutzers von dem Nutzer-Computersystem über das Netzwerk an das Dienst-Computersystem, das mit dem ID-Provider-Computersystem gekoppelt ist,
- Senden einer Attributsspezifikation vom Dienst-Computersystem an das ID-Provider-Computersystem über das Netzwerk, wobei die Attributsspezifikation diejenigen Attribute spezifiziert, die das Dienst-Computersystem zur Registrierung des Nutzers benötigt,
- Authentifizierung des Nutzers gegenüber dem ID-Token,
- Authentifizierung des ID-Tokens gegenüber dem ID-Provider-Computersystem,
- Aufbau eines gesicherten Übertragungskanals mit Ende-zu-Ende-Verschlüsselung zwischen dem ID-Token und dem ID-Provider-Computersystem über das Netzwerk,
- Durchführung eines Lesezugriffs des ID-Provider-Computersystems auf den ID-Token zum Lesen der Attribute gemäß der Attributspezifikation aus dem ID-Token,
- Übertragung einer in dem Speicherbereich des ID-Tokens gespeicherten Attribute von dem ID-Token an das ID-Provider-Computersystem über den gesicherten Übertragungskanal,
- Ausgabe der aufgrund der Lesezugriffe von dem ID-Provider-Computersystem aus dem ID-Token ausgelesenen Attribute an das Dienst-Computersystem.
wobei die Attribute die Adresse enthalten, an die der Träger gesendet wird.

Unter einem "ID-Token" wird hier insbesondere ein tragbares elektronisches Gerät verstanden, welches zumindest einen geschützten elektronischen Datenspeicher zur Speicherung der Attribute und eine Kommunikations-Schnittstelle zum Auslesen der Attribute aufweist. Der Speicherbereich ist geschützt, um zu verhindern, dass das in dem Speicherbereich gespeicherte Attribut in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken erzeugt werden.

Unter einem "ID-Provider-Computersystem" wird hier ein Computersystem verstanden, welches dazu ausgebildet ist, Attribute aus dem ID-Token eines Nutzers auszulesen und eine Attributspezifikation in den ID-Token zu schreiben. Vorzugsweise wird das ID-Provider-Computersystem in einem sogenannten Trustcenter betrieben, um ein möglichst hohes Maß an Sicherheit zu schaffen. Beispielsweise ist aus DE 10 2008 000 067 B4 ein Verfahren zum Lesen von Attributen aus einem ID-Token bekannt, bei dem ein ID-Provider-Computersystem über ein Netzwerk zumindest einen Attributwert aus dem ID-Token ausliest, wobei es sich bei dem ID-Token zum Beispiel um ein Ausweisdokument handeln kann. Aus DE 10 2008 040 416 A1, DE 10 2009 001 959 A1, DE 10 2009 027 676, DE 10 2009 027 681 A1, DE 10 2009 027 682 A1, DE 10 2009 027 686 A1, DE 10 2009 027 723 A1, DE 10 2009 046 205 A1 und DE 10 2010 028 133 A1 sind Weiterbildungen dieses Verfahrens bekannt.

Unter einem "Attribut" werden hier insbesondere Daten verstanden, die den Nutzer des ID-Tokens oder den ID-Token selbst betreffen, insbesondere Personalisierungsdaten, wie zum Beispiel persönliche Daten des Nutzers, eine Gültigkeitsdauer oder den Herausgeber des ID-Tokens oder eine Zahlungsinformation, wie zum Beispiel Kreditkartendaten oder andere Daten für ein elektronisches Bezahlsystem.

Unter einer "Attributspezifikation" wird hier eine Beschreibung von denjenigen Attributen verstanden, die zum Beispiel von einem Dienst-Computersystem zur Erbringung eines Dienstes benötigt werden. Die Attribute können über Feldnamen von Datenfeldern identifiziert werden, in denen die jeweiligen Attributwerte gespeichert sind, und/oder über ein semantisches Netz, d.h. eine Konvention, wie Attribute systemübergreifend bezeichnet werden.

Unter einem "Lesegerät" wird hier ein elektronisches Gerät verstanden, welches einen Lesezugriff und auch einen Schreibzugriff auf den ID-Token ermöglicht, insbesondere ein sogenanntes Chipkartenterminal. Das Lesegerät kann einen integralen Bestandteil des Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät bzw. ein Basis-, Standard- oder Komfort-Chipkartenlesegerät handeln.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Unter einem "geschützten Speicherbereich" wird hier ein Speicherbereich verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Die Attribute bezeichnen vorzugsweise den Wohnsitz oder die Meldeadresse des Nutzers, wodurch sichergestellt ist, dass der Träger mit dem ersten Authentifizierungscode ausschließlich dem Nutzer zugestellt wird. Dieser kann nach Empfang des Trägers den ersten Authentifizierungsbarcode in einer sicheren Umgebung den Brief mit dem Träger öffnen und den ersten Authentifizierungscode mit seinem mobilen Telekommunikationsendgerät erfassen und in diesem speichern. Ein Ausspähen des ersten Authentifizierungscodes kann so verhindert oder zumindest deutlich erschwert werden.

Der Authentifizierungsschlüssel kann auf verschiedene Weise mittels der Authentifizierungscodes erzeugt werden. Es muss lediglich sichergestellt sein, dass beide Authentifizierungscodes zur Erzeugung des Authentifizierungsschlüssels erforderlich sind. Das Erzeugen des Authentifizierungsschlüssels kann beispielswiese das Kombinieren des ersten und des zweiten Authentifizierungscodes umfassen.

Alternativ kann der zweite Authentifizierungscode der mit dem ersten Authentifizierungscode verschlüsselte Authentifizierungsschlüssel sein und das Erzeugen des Authentifizierungsschlüssels umfasst das Entschlüsseln des zweiten Authentifizierungscodes mit dem ersten Authentifizierungscode.

Insbesondere kann zur Erzeugung des Authentifizierungsschlüssels auf die Authentifizierung des Nutzers gegenüber dem mobilen Telekommunikationsendgerät, insbesondere gegenüber dem Anwendungsprogramm, erforderlich sein, wobei die Entschlüsselung des Authentifizierungsschlüssels beispielsweise mittels eines Codes oder eines Passwortes erfolgt, das der Nutzer bei der Authentifizierung gegenüber dem mobilen Telekommunikationsendgerät eingibt.

Der erste und/oder der zweite Authentifizierungscode werden vorzugsweise mit einer optischen Schnittstelle des mobilen Telekommunikationsendgerätes erfasst. Dies stellt eine einfache Handhabung sicher und vermeidet Übertragungsfehler. Zudem können mittels optisch lesbarer Codes auch kompliziertere bzw. längere Authentifizierungscodes übermittelt werden, wodurch die Sicherheit des Verfahrens erhöht werden kann.

Der zweite Authentifizierungscode wird beispielsweise auf einem Bildschirm des Nutzercomputersystems angezeigt wird und mit der optischen Schnittstelle des mobilen Telekommunikationsendgerätes erfasst. Dies ermöglicht eine komfortable Eingabe der Nutzerkennung. Zudem kann der zweite Authentifizierungscode so nur temporär angezeigt werden und nach der Erfassung durch das mobile Telekommunikationsendgerät gelöscht werden, so dass die Gefahr eines Ausspähens des zweiten Authentifizierungscodes verringert wird.

Der zweite Authentifizierungscode kann einem mobilen Telekommunikationsendgerät zugeordnet ist, wobei beim Senden einer Nutzerkennung vom Nutzercomputersystem an das Dienstcomputersystem eine Gerätekennung des mobilen Telekommunikationsendgeräts an das Dienst-Computersystem gesendet wird, und wobei der der Gerätekennung zugeordnete zweite Authentifizierungscodes an das Nutzer-computersystem gesendet wird. In dieser Ausführungsform kann nur ein vorher registriertes mobiles Telekommunikationsendgerät gegenüber dem Dienst-Computersystem authentifiziert werden. Dies verringert die Gefahr, dass das Anwendungsprogramm mit dem gespeicherten ersten Authentifizierungscode auf ein nicht im Besitz des Nutzers befindliches mobiles Telekommunikationsendgerät kopiert werden kann.

Ergänzend kann das mobile Telekommunikationsendgerät eine Gerätekennung aufweisen und der Authentifizierungsschlüssel ist im Dienst-Computersystem der Gerätekennung des mobilen Telekommunikationsendgeräts zugeordnet. Die Gerätekennung des mobilen Telekommunikationsendgeräts wird mit dem Authentifizierungsschlüssel übermittelt und eine Authentifizierung des mobilen Telekommunikationsendgeräts gegenüber dem Dienstcomputersystem erfolgt mittels des Authentifizierungsschlüssels und der Gerätekennung. Dies stellt ebenfalls sicher, dass nur ein vorab registriertes mobiles Telekommunikationsendgerät gegenüber dem Dienst-Computersystem authentifiziert werden kann.

Eine Zuordnung des Authentifizierungsschlüssels zu einer Gerätekennung oder ein zusätzliches Senden einer Gerätekennung bietet beispielsweise den Vorteil, dass einzelne Geräte für eine Authentifizierung und somit einen Verbindungsaufbau mit dem Dienst-Computer-System gesperrt werden können, während mit einem anderen registrierten mobilen Telekommunikationsendgerät weiterhin eine Nutzung des Dienstes möglich ist.

Eine Sperrung eines mobilen Telekommunikationsendgerätes kann beispielsweise erfolgen, indem sich der Nutzer gegenüber dem Dienst-Computersystem authentifiziert, insbesondere mittels eines bei der Registrierung des Nutzers verwendeten ID-Tokens. Nach der Authentifizierung des Nutzers kann eine Sperrung einer Gerätekennung und/oder eines Authentifizierungsschlüssels für einen Authentifizierung eines mobilen Telekommunikationsendgerätes durch den Nutzer erfolgen. Durch die Authentifizierung des Nutzers durch seinen ID-token ist sichergestellt, dass nur der rechtmäßige Nutzer eine Sperrung seiner mobilen Telekommunikationsendgeräte veranlassen kann.

In einem weiteren Aspekt betrifft die Erfindung ein mobiles Telekommunikationsendgerät zur Durchführung eines erfindungsgemäßen Verfahrens. Das mobile Telekommunikationsendgerät hat eine Schnittstelle für ein öffentliches Netzwerk, eine optische Schnittstelle zur Erfassung des ersten und des zweiten Authentifizierungscodes sowie einen Speicher. Der Speicher weist einen geschützten Speicherbereich auf, in dem der erste Authentifizierungscode gespeichert ist. Im Speicher ist des Weiteren ein Anwendungsprogramm gespeichert, das zur Erfassung des ersten und des zweiten Authentifizierungscodes, zur Authentifizierung des Nutzers sowie zur Erzeugung des Authentifizierungsschlüssels aus dem ersten und dem zweiten Authentifizierungscode konfiguriert ist.

In einem weiteren Aspekt betrifft die Erfindung ein System zur Durchführung eines erfindungsgemäßen Verfahrens mit einem solchen mobilen Telekommunikationsendgerät, einem Nutzer-Computersystem sowie einem Dienst-Computersystem, wobei das Dienst-Computersystem eine Schnittstelle für ein öffentliches Netzwerk sowie einen Speicher aufweist, in dem eine Nutzerkennung, Registrierungsdaten, ein zweiter Authentifizierungscode sowie ein Authentifizierungsschlüssel eines Nutzers gespeichert sind, wobei das Dienst-Computersystem ausgebildet ist zum Senden des zweiten Authentifizierungscodes an das Nutzer-Computersystem über ein öffentliches Netzwerk sowie zum Empfang des Authentifizierungsschlüssels über ein mobiles Netzwerk vom mobilen Telekommunikationsendgerät sowie zur Authentifizierung des mobilen Telekommunikationsendgeräts mittels des Authentifizierungsschlüssels.

Im Weiteren werden Ausführungsformen der Erfindung mit Bezugnahme auf die Zeichnungen erläutert. In diesen zeigen:
- Figur 1: eine schematische Darstellung eines Systems mit einem mobilen Telekommunikationsendgerät zur Durchführung eines Verfahrens zur Authentifizierung des mobilen Telekommunikationsendgeräts an einem Dienst-Computersystem, und
- Figur 2: eine Ablaufdiagramm eines Verfahrens zur eines Verfahrens zur Authentifizierung des mobilen Telekommunikationsendgeräts an einem Dienst-Computersystem.

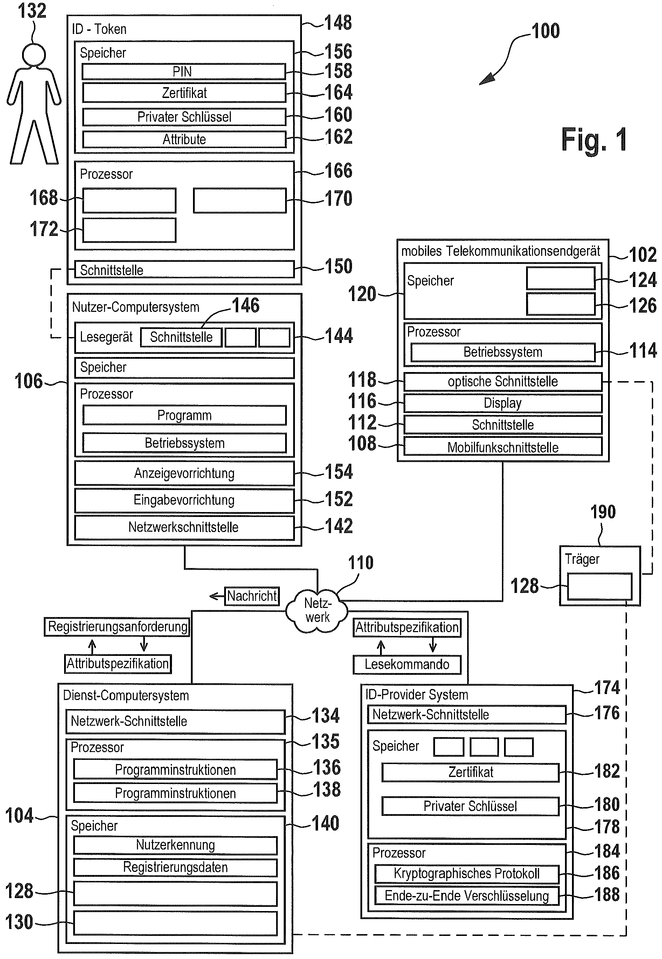

In Figur 1 ist ein System 100 zur Durchführung eines Authentifizierungsverfahrens eines mobilen Telekommunikationsendgeräts 102 an einem Dienst-Computersystem 104 gezeigt. Das System weist neben dem Telekommunikationsendgeräts 102 und dem Dienst-Computersystem 104 ein Nutzer-Computersystem 106 auf.

Das mobile Telekommunikationsendgerät 102 hat zumindest eine Mobilfunk-Schnittstelle 108, die sowohl zur Kommunikation über den Seitenkanal des Mobilfunknetzes, insbesondere zum Empfang von SMS-Nachrichten, als auch zur Verbindung mit einem öffentliches Netzwerk 110 , insbesondere dem Internet, ausgebildet sein kann. Das Telekommunikationsendgerät 102 kann über ein oder mehrere weitere drahtlose Kommunikations-Schnittstellen verfügen, wie zum Beispiel eine WLAN-Schnittstelle 112, über die ebenfalls eine Internet-Session aufgebaut werden kann.

Das Telekommunikationsendgerät 102 hat ein Betriebssystem 114, wie zum Beispiel ein iOS-, Android- oder Windows-Betriebssystem, eine Anzeigevorrichtung, das heißt ein Display 116 sowie eine optische Schnittstelle 118, insbesondere eine Kamera. Das Telekommunikationsendgerät 102 verfügt ferner über einen Speicher 120, der einen geschützten Speicherbereich 122 aufweist, indem ein erster Authentifizierungscodaz kann, sowie über ein Anwendungsprogramm 126, dass aus einem ersten Authentifizierungscodes 124 und einem zweiten Authentifizierungscode 128 einen Authentifizierungsschlüssel 130 erzeugen und diesen zur Authentifizierung des mobilen Telekommunikationsendgerätes 102 an das Dienst-Computersystem 104 senden kann.

Das Dienst-Computersystem 104 kann zur Entgegennahme einer Bestellung oder eines Auftrags für eine Dienstleistung oder ein Produkt, insbesondere eine Online-Dienstleistung, ausgebildet sein. Beispielsweise kann ein Nutzer 132 online über das Netzwerk 110 ein Konto bei einer Bank eröffnen oder eine andere Finanz- oder Bankdienstleistung in Anspruch nehmen. Das Dienst-Computersystem 104 kann auch als Online-Warenhaus ausgebildet sein, sodass der Benutzer 132 beispielsweise online ein Mobiltelefon oder dergleichen erwerben kann. Ferner kann das Dienst-Computersystem 104 auch zur Lieferung von digitalen Inhalten ausgebildet sein, beispielsweise für den Download von Musik- und/oder Videodaten oder als Behördenserver für eine eGovernment Anwendung.

Das Dienst-Computersystem 104 hat hierzu eine Netzwerk-Schnittstelle 134 zur Verbindung mit dem Netzwerk 110. Ferner hat das Dienst-Computersystem 104 zumindest einen Prozessor 135 zur Ausführung von Programminstruktionen 136, 138 sowie einen Speicher 140, in dem eine Nutzerkennung, Registrierungsdaten, ein zweiter Authentifizierungscode sowie ein Authentifizierungsschlüssel eines Nutzers gespeichert sind. Die Programminstruktionen 136 sind zur Authentifizierung des mobilen Telekommunikationsendgeräts 102 mit einem nachfolgend beschriebenen Verfahren ausgebildet. Die Programminstruktionen 138 sind zur Authentifizierung eines Nutzers und zum Anlegen eines Benutzerkontos bzw. zum Erzeugen einer Nutzerkennung, eines ersten und eines zweiten Authentifizierungscodes 124, 128 sowie eines Authentifizierungsschlüssels 130 ausgebildet.

Bei dem Nutzer-Computersystem 106 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 106 hat eine Schnittstelle 142 für das Netzwerk 110, ein Lesegerät 144 mit einer Schnittstelle 146 zur Kommunikation mit einem ID-Token 148, der eine entsprechende Schnittstelle 150 aufweist, eine Eingabevorrichtung 152 sowie eine Anzeigevorrichtung 154.

Alternativ kann das Nutzer-Computersystem 106 mit seiner Schnittstelle 146 nicht unmittelbar mit der Schnittstelle 150 kommunizieren, sondern über ein an die Schnittstelle 146 angeschlossenes Lesegerät für den ID-Token 148. Über dieses Lesegerät, wie zum Beispiel einen so genannten Klasse 2-Chipkarten-Terminal, kann auch die Eingabe der PIN erfolgen.

Der ID-Token 148 hat einen elektronischen Speicher 156 mit geschützten Speicherbereichen 158, 160 und 162. Der geschützte Speicherbereich 158 dient zur Speicherung eines Referenzwerts, der für die Authentifizierung des Nutzers 132 gegenüber dem ID-Token 148 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 132, welches für die Authentifizierung des Nutzers gegenüber dem ID-Token 148 verwendet werden kann.

Der geschützte Speicherbereich 160 dient zur Speicherung eines privaten Schlüssels und der geschützte Speicherbereich 162 dient zur Speicherung von Attributen, zum Beispiel des Nutzers 132, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 156 kann ferner einen Speicherbereich 164 zur Speicherung eines Zertifikats aufweisen. Das Zertifikat beinhaltet einen öffentlichen Schlüssel, der dem in dem geschützten Speicherbereich 160 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 156 des ID-Tokens 148 gespeichert sein. Alternativ oder zusätzlich kann das Zertifikat auch in einem öffentlichen Verzeichnisserver gespeichert sein.

Der ID-Token 148 hat einen Prozessor 166. Der Prozessor 166 dient zur Ausführung von Programminstruktionen 168, 170 und 172. Die Programminstruktionen 168 dienen zur Nutzerauthentifizierung, d.h. zur Authentifizierung des Nutzers 132 gegenüber dem ID-Token.

Bei einer Ausführungsform mit PIN gibt der Nutzer 132 seine PIN zu seiner Authentifizierung ein, beispielsweise in das Nutzer-Computersystem 106. Durch Ausführung der Programminstruktionen 170 wird dann auf den geschützten Speicherbereich 158 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 132 als authentifiziert.

Alternativ wird ein biometrisches Merkmal des Nutzers 132 erfasst. Beispielsweise hat der ID-Token 148 hierzu einen Fingerabdrucksensor oder ein Fingerabdrucksensor ist an das Nutzer-Computersystem 106 angeschlossen. Die von dem Nutzer 132 erfassten biometrischen Daten werden durch Ausführung der Programminstruktionen 170 bei dieser Ausführungsform mit den in dem geschützten Speicherbereich 158 gespeicherten biometrischen Referenzdaten verglichen. Bei hinreichender Übereinstimmung der von dem Nutzer 132 erfassten biometrischen Daten mit den biometrischen Referenzdaten gilt der Nutzer 132 als authentifiziert.

Die Programminstruktionen 170 dienen zur Ausführung der den ID-Token 148 betreffenden Schritte eines kryptographischen Protokolls zur Authentifizierung eines ID-Provider-Computersystems 174 gegenüber dem ID-Token 148. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 174 gegenüber dem ID-Token und weist dadurch seine Leseberechtigung zum Lesen der in dem geschützten Speicherbereich 162 gespeicherten Attribute nach. Die Authentifizierung kann auch gegenseitig sein, d.h. auch der ID-Token 148 muss sich dann gegenüber dem ID-Provider-Computersystem 174 nach demselben oder einem anderen kryptographischen Protokoll authentifizieren.

Die Programminstruktionen 172 dienen zur Ende-zu-Ende-Verschlüsselung von zwischen dem ID-Token 148 und dem ID-Provider-Computersystem 174 übertragenen Daten, zumindest aber der von dem ID-Provider-Computersystem 174 aus dem geschützten Speicherbereich 162 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 148 und dem ID-Provider-Computersystem 174 vereinbart wird.

Das ID-Provider-Computersystem 174 hat eine Netzwerk-Schnittstelle 176 zur Kommunikation über das Netzwerk 110. Das ID-Provider-Computersystem 174 hat ferner einen Speicher 178, in dem ein privater Schlüssel 180 des ID-Provider-Computersystems 174 sowie das entsprechende Zertifikat 182 gespeichert ist. Auch bei diesem Zertifikat kann es sich beispielsweise um ein Zertifikat nach einem PKI-Standard, wie zum Beispiel X.509 handeln.

Das ID-Provider-Computersystem 174 hat ferner zumindest einen Prozessor 184 zur Ausführung von Programminstruktionen 186 und 188. Durch Ausführung der Programminstruktionen 186 werden die das ID-Provider-Computersystem 174 betreffende Schritte des kryptographischen Protokolls ausgeführt. Insgesamt wird also das kryptographische Protokoll durch Ausführung der Programminstruktionen 172 durch den Prozessor 166 des ID-Tokens 148 sowie durch Ausführung der Programminstruktionen 186 durch den Prozessor 184 des ID-Provider-Computersystems 174 implementiert.

Die Programminstruktionen 188 dienen zur Implementierung der Ende-zu-Ende-Verschlüsselung auf Seiten des ID-Provider-Computersystems 174, beispielsweise basierend auf dem symmetrischen Schlüssel, der anlässlich der Ausführung des kryptographischen Protokolls zwischen dem ID-Token 148 und dem ID-Provider-Computersystem 174 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 174 befindet sich vorzugsweise in einer besonders geschützten Umgebung, insbesondere in einem so genannten Trust-Center, sodass das ID-Provider-Computersystem 174 in Kombination mit der Notwendigkeit der Authentifizierung des Nutzers 132 gegenüber dem ID-Token 148 den Vertrauensanker für die Authentizität der aus dem ID-Token 148 ausgelesenen Attribute bildet.

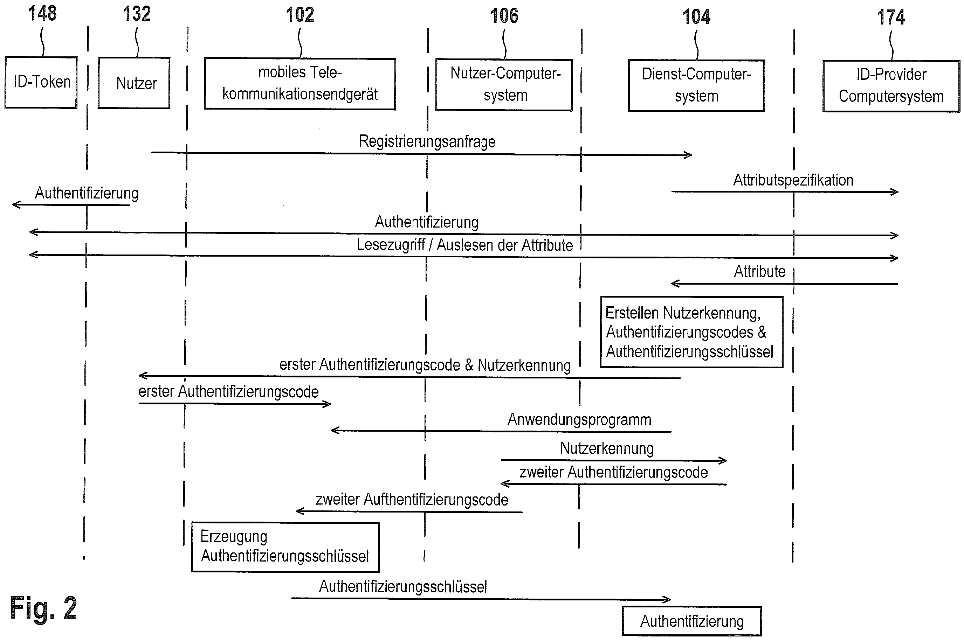

Ein Verfahren zur Authentifizierung eines mobilen Telekommunikationsendgerätes 102 gegenüber dem Dienst-Computersystem 104 wird nachfolgend mit Bezug auf Figur 2 beschrieben.

Um einen Dienst des Dienst-Computersystems 104 zu nutzen, muss sich der Nutzer 132 zunächst am Dienst-Computersystem 104 registrieren bzw. anmelden, wobei im Speicher des Dienst-Computersystems 104 Registrierungsdaten sowie der zweite Authentifizierungscodes 128 und den Authentifizierungsschlüssel 130 des Nutzers abgespeichert werden. Die Registrierungsdaten können beispielsweise eine Nutzerkennung sowie ein Passwort des Nutzers 132 enthalten, mit denen sich der Nutzer 132, beispielsweise über ein Nutzer-Computersystem 106, am Dienst-Computersystem 104 anmelden kann.

Bei einer Registrierung des Nutzers ist es erforderlich, zunächst die Identität des Nutzers zu prüfen. Dies erfolgt beispielsweise über ein Auslesen von Attributen aus dem ID-Token 148 des Nutzers 132.

Ein Verfahren zum Auslesen der Attribute weist beispielsweise die folgenden Schritte auf:
- Senden einer Registrierungsanfrage des Nutzers 132 von dem Nutzer-Computersystem 106 über das Netzwerk 110 an das Dienst-Computersystem 104, das mit dem ID-Provider-Computersystem 174 gekoppelt ist,
- Senden einer Attributsspezifikation vom Dienst-Computersystem 104 an das ID-Provider-Computersystem 174 über das Netzwerk 110, wobei die Attributsspezifikation diejenigen Attribute spezifiziert, die das Dienst-Computersystem zur Registrierung des Nutzers 132 benötigt,
- Authentifizierung des Nutzers 132 gegenüber dem ID-Token 148,
- Authentifizierung des ID-Tokens 148 gegenüber dem ID-Provider-Computersystem 174,
- Aufbau eines gesicherten Übertragungskanals mit Ende-zu-Ende-Verschlüsselung zwischen dem ID-Token 148 und dem ID-Provider-Computersystem 174 über das Netzwerk 110,
- Durchführung eines Lesezugriffs des ID-Provider-Computersystems 174 auf den ID-Token 148 zum Lesen der Attribute gemäß der Attributspezifikation aus dem ID-Token 148,
- Übertragung einer in dem Speicherbereich des ID-Tokens 148 gespeicherten Attribute von dem ID-Token 148 an das ID-Provider-Computersystem 174 über den gesicherten Übertragungskanal,
- Ausgabe der aufgrund der Lesezugriffe von dem ID-Provider-Computersystem 174 aus dem ID-Token 148 ausgelesenen Attribute an das Dienst-Computersystem 104.

Die Attribute enthalten beispielsweise den Name sowie die Meldeadresse des Nutzers 132.

Nach erfolgreicher Registrierung des Nutzers 132, Speicherung der Registrierungsdaten und der Erstellung einer Nutzerkennung werden der erste Authentifizierungscode 124, der zweite Authentifizierungscode 128 sowie der Authentifizierungsschlüssel 130 erstellt. Der zweite Authentifizierungscode 128 sowie der Authentifizierungsschlüssel 130 werden mit der Nutzerkennung des Nutzers 132 sowie den Registrierungsdaten des Nutzers 132 im Speicher des Dienst-Computersystems 104 gespeichert.

Der erste Authentifizierungscode 124 wird anschließend in einer optisch lesbaren Form auf einen Träger 190 aufgebracht, beispielsweise auf einen Briefbogen. Anschließend wird der Träger 190 mit einem Brief an die aus dem ID-Token ausgelesene Meldeadresse des Nutzers 132 gesendet. Durch die Versendung an die Meldeadresse ist sichergestellt, dass der erste Authentifizierungscode 124 nur dem berechtigten Nutzer 132 zugestellt wird.

Der Nutzer 132 kann den Brief mit dem Träger 190 anschließend in einer sicheren, beispielsweise blickgeschützten, Umgebung öffnen und den ersten Authentifizierungscode 124 im geschützten Speicherbereich seines mobilen Telekommunikationsendgerätes 102 speichern.

Hierzu kann der Nutzer 132 ein Anwendungsprogramm 126, das beispielsweise auf dem Dienst-Computersystem 104 bereitgestellt wird, auf das mobile Telekommunikationsendgerät 102 laden. Das Anwendungsprogramm 126 kann anschließend aufgerufen werden und mittels der optischen Schnittstelle 118 den ersten Authentifizierungscode erfassen und im geschützten Speicherbereich des mobilen Telekommunikationsendgerätes 102 speichern.

Die Authentifizierung des mobilen Telekommunikationsendgerätes 102 gegenüber dem Dienst-Computersystem 104 erfolgt anschließend mit folgenden Schritten:
- Zunächst wird eine Netzwerkverbindung zwischen einen Nutzer-Computersystem 106 und einem Dienst-Computersystem 104 über das öffentliches Netzwerk 110 aufgebaut. Der Nutzer authentifiziert sich anschließend gegenüber dem Dienst-Computersystem 104, beispielsweise indem er seine Nutzerkennung und gegebenenfalls sein Passwort in das Nutzer-computersystem 106 eingibt, dass diese anschließend über die Netzwerkverbindung an das Dienst-Computersystem 104 sendet. Alternativ kann auch eine 2-Faktor-Authentifizierung des Nutzers erfolgen, die ein höheres Sicherheitsniveau ermöglicht.
- Anschließend wird der der Nutzerkennung zugeordnete zweite Authentifizierungscodes vom Dienst-Computersystem 104 über die Netzwerkverbindung an das Nutzercomputersystem gesendet und auf der Anzeigevorrichtung 154 des Nutzer-Computersystems 106 angezeigt.
- Zur Erfassung des zweiten Authentifizierungscodes 128 mit dem mobilen Telekommunikationsendgerät 102 authentifiziert sich der Nutzer 132 gegenüber dem mobilen Telekommunikationsendgerät 102 durch Erfassung von nutzerspezifischen Informationen und startet das Anwendungsprogramm 126. Alternativ oder zusätzlich kann auch eine Authentifizierung des Nutzers 132 gegenüber dem Anwendungsprogramm 126 erfolgen.
- Anschließend wird der zweite Authentifizierungscode 128 optisch mit der optischen Schnittstelle des mobilen Telekommunikationsendgeräts 102 von der Anzeigevorrichtung 154 des Nutzer-Computersystems 106 erfasst.
- Nach dem Erfassen des zweiten Authentifizierungscodes 128 erzeugt das Anwendungsprogramm 126 aus dem ersten Authentifizierungscode 124 und dem zweiten Authentifizierungscode 128 den Authentifizierungsschlüssel 130.
- Anschließend wird eine Mobilfunkverbindung zwischen dem mobilen Telekommunikationsendgerät 102 und dem Dienst-Computersystem 104 über das öffentliches Netzwerk 110 aufgebaut und das mobile Telekommunikationsendgerät 102 authentifiziert sich gegenüber dem Dienst-Computersystem 104 mittels des Authentifizierungsschlüssels 130 über die Mobilfunkverbindung. Die erfolgreiche Authentifizierung wird dem Nutzer 132 anschließend auf der Anzeigevorrichtung 154 des Nutzer-Computersystems 106 angezeigt.

Nach erfolgreicher Authentifizierung des mobilen Telekommunikationsendgerätes 102 können zwischen dem mobilen Telekommunikationsendgerät 102 und dem Dienst-Computersystem 104 permanente, sichere Zugangsdaten ausgehandelt werden, die beispielsweise den Authentifizierungsschlüssel 130 enthalten, und ein Dienst des Dienst-Computersystem 104 mit dem mobilen Telekommunikationsendgerät 102 genutzt werden.

Das Erzeugen des Authentifizierungsschlüssels 130 kann auf verschiedene Weise erfolgen. Es muss lediglich sichergestellt sein, dass ein Verfahren gewählt wird, bei dem zwingend die Verwendung sowohl des ersten Authentifizierungscodes 124 wie auch des zweiten Authentifizierungscodes 128 erforderlich ist. Der Authentifizierungsschlüssel 130 kann beispielsweise durch Kombinieren des ersten Authentifizierungscodes 124 und des zweiten Authentifizierungscodes 128 erzeugt werden. Alternativ kann der der zweite Authentifizierungscode 128 der mit dem ersten Authentifizierungscode 124 verschlüsselte Authentifizierungsschlüssel 130 sein und das Erzeugen des Authentifizierungsschlüssels 130 umfasst das Entschlüsseln des zweiten Authentifizierungscodes 128 mit dem ersten Authentifizierungscode 124.

In der in den Figuren 1 und 2 beschriebenen Ausführungsform wird lediglich ein erster und ein zweiter Authentifizierungscode 124, 128 sowie ein Authentifizierungsschlüssel 130 verwendet. Das Anwendungsprogramm 126 sowie der erste Authentifizierungscode 124 können auf verschiedene mobile Telekommunikationsendgeräte 102 geladen werden, die sich anschließend mit dem entsprechenden zweiten Authentifizierungscode 128 sowie dem Authentifizierungsschlüssel 130 gegenüber dem Dienst-Computersystem 104 authentifizieren können.

Um die Sicherheit des Verfahrens zu erhöhen ist es auch denkbar, dass für jedes mobile Telekommunikationsendgerät 102 ein separater Authentifizierungsschlüssel 130 durch das Dienst-Computersystem 104 erzeugt wird. Dadurch kann, beispielsweise bei einem Verlust eines mobilen Telekommunikationsendgerätes 102, dieses Telekommunikationsendgerät 102 gesperrt werden, indem der entsprechende Authentifizierungsschlüssel 130 gesperrt wird, während sich die anderen mobilen Telekommunikationsendgeräte 102 mit ihren individuellen Authentifizierungsschlüssel 130 weiterhin gegenüber dem Dienst-Computersystem authentifizieren können.

Die Authentifizierungsschlüssel 130 können in einer solchen Ausführungsform beispielsweise aus einem gemeinsamen ersten Authentifizierungscode 124 und verschiedenen zweiten Authentifizierungscodes 128 bestehen. Für ein neues mobiles Telekommunikationsendgerät 102 wird ein neuer Authentifizierungsschlüssel 130 sowie ein neuer zweiter Authentifizierungscode 128 erstellt, der dem Nutzer 132 angezeigt wird und den der Nutzer 132 mit dem neuen mobilen Telekommunikationsendgerät 102 erfassen kann.

Optional kann der Nutzer bei der Registrierung auch eine Gerätekennung des mobilen Telekommunikationsendgerätes 102 übermitteln, die in den Registrierungsdaten gespeichert wird. Das Anwendungsprogramm 128 kann die Gerätekennung auslesen und mit dem Authentifizierungsschlüssel übermitteln. Nur wenn die Gerätekennung und der Authentifizierungsschlüssel 130 übereinstimmen, erfolgt eine Authentifizierung des mobilen Telekommunikationsendgerätes 102.

Alternativ kann der Authentifizierungsschlüssel 130 auch unter Verwendung der Gerätekennung erzeugt werden, so dass bereits durch den Authentifizierungsschlüssel 130 eine eindeutige Authentifizierung eines einzelnen mobilen Telekommunikationsendgerätes 102 erfolgen kann.

Für eine Sperrung eines Authentifizierungsschlüssels 130 oder einer Gerätekennung ist es vorzugsweise erforderlich, dass sich der Nutzer gegenüber dem Dienst-Computersystem 104 authentifiziert, beispielsweise auf die oben beschriebene weise mittels des bei der Registrierung verwendeten ID-Tokens 148 und/oder mit seiner Nutzerkennung.

Das beschriebene Verfahren stellt eine erhöhte Sicherheit bei der Authentifizierung eines mobilen Telekommunikationsendgerätes 102 bereit, da die Kenntnis beider Authentifizierungscodes 124, 128 erforderlich ist, wobei die Authentifizierungscodes 124, 128 über verschiedene Kommunikations- bzw. Transportwege und zu verschiedenen Zeitpunkten zum Nutzer 132 gelangen. Da der erste Authentifizierungscode 124 in einer gesicherten, blickgeschützten Umgebung ausgelesen und im mobilen Telekommunikationsendgerät 102 gespeichert werden kann, ist ein Ausspähen des ersten Authentifizierungscode 124 zuverlässig verhindert oder zumindest erschwert. Die Kenntnis des zweiten Authentifizierungscodes, der unmittelbar beim Authentifizierungsverfahren bzw. beim Koppelungsverfahren angezeigt wird, ist allein nicht ausreichend für eine Authentifizierung des mobilen Telekommunikationsendgerätes 102.

Nach erfolgreicher Registrierung des Nutzers 132 kann die Authentifizierung eines mobilen Telekommunikationsendgerätes 102 mit jedem Nutzer-Computersystem 106 erfolgen, das eine Anzeigevorrichtung 154 sowie eine Schnittstelle 142 für das öffentliche Netzwerk 110 aufweist. Es ist lediglich erforderlich, dass eine Netzwerkverbindung zum Dienst-Computersystem 104 aufgebaut und der zweite Authentifizierungscode 128 mit der Anzeigevorrichtung angezeigt werden kann.

### Bezugszeichenliste

- 100: System
- 102: Telekommunikationsendgerät
- 104: Dienst-Computersystem
- 135: Prozessor des Dienst-Computersystem
- 106: Nutzer-Computersystem
- 108: Schnittstelle
- 110: Netzwerk
- 112: Schnittstelle
- 114: Betriebssystem
- 116: Netzwerk
- 116: Display
- 118: Schnittstelle
- 120: Speicher
- 122: Speicherbereich
- 124: erster Authentifizierungscode
- 126: Anwendungsprogramm
- 128: zweiter Authentifizierungscode
- 130: Authentifizierungsschlüssel
- 132: Nutzer
- 134: Schnittstelle
- 136: Programminstruktionen
- 138: Programminstruktionen
- 140: Speicher
- 142: Schnittstelle
- 144: Lesegerät
- 146: Schnittstelle
- 148: ID-Token
- 150: Schnittstelle
- 152: Eingabevorrichtung
- 154: Anzeigevorrichtung
- 156: Speicher
- 158: Speicherbereich
- 160: Speicherbereich
- 162: Speicherbereich
- 164: Speicherbereich
- 166: Prozessor
- 168: Programminstruktionen
- 170: Programminstruktionen
- 172: Programminstruktionen
- 174: ID-Provider-Computersystem
- 176: Schnittstelle
- 178: Speicher
- 180: Schlüssel
- 182: Zertifikat
- 184: Prozessor
- 186: Programminstruktionen
- 188: Programminstruktionen
- 190: Träger

## Patentansprüche

1. Verfahren zur Authentifizierung eines mobilen Telekommunikationsendgerät (102) an einem Dienst-Computersystem (104) über ein öffentliches Netzwerk (110),
wobei das mobile Telekommunikationsendgerät (102) einen gesicherten Speicherbereich (122) aufweist, in dem ein erster Authentifizierungscode (124) gespeichert ist, und
wobei im Dienst-Computersystem (104) ein zweiter Authentifizierungscode (128) gespeichert ist,
wobei der zweite Authentifizierungscode (128) einer Nutzerkennung zugeordnet ist,
mit folgenden Schritten:
- Aufbau einer Netzwerkverbindung zwischen einem Nutzer-Computersystem (106) und einem Dienst-Computersystem (104) über das öffentliches Netzwerk (110),
- Authentifizieren eines Nutzers gegenüber dem Dienst-Computersystem (104) über das Nutzercomputersystem (106) und die Netzwerkverbindung, insbesondere mit einer 2-Faktor-Authentifizierung, wobei eine Nutzerkennung vom Nutzer-Computersystem (106) an das Dienst-Computersystem (104) über die Netzwerkverbindung gesendet wird,
- Senden des der Nutzerkennung zugeordneten zweiten Authentifizierungscodes (128) an das Nutzer-Computersystem (106) über die Netzwerkverbindung,
- Anzeige des zweiten Authentifizierungscodes (128) an eine Anzeigevorrichtung (154) des Nutzer-Computersystems (106),
- Authentifizieren des Nutzers (132) gegenüber dem mobilen Telekommunikationsendgerät (102) durch Erfassung von nutzerspezifischen Informationen,
- Optisches Erfassen des zweiten Authentifizierungscodes (128) durch das mobile Telekommunikationsendgeräts (102) vom Nutzer-Computersystem (106),
- Erzeugen eines Authentifizierungsschlüssels (130) aus dem ersten und dem zweiten Authentifizierungscode (124, 128) durch das mobile Telekommunikationsendgerät (102),
- Aufbau einer Mobilfunkverbindung zwischen dem mobilen Telekommunikationsendgerät (102) und dem Dienst-Computersystem (104) über das öffentliches Netzwerk (110),
- Authentifizierung des mobilen Telekommunikationsendgeräts (102) gegenüber dem Dienst-Computersystem (102) mittels des Authentifizierungsschlüssels (130) über die Mobilfunkverbindung,
wobei der zweite Authentifizierungscode (128) der mit dem ersten Authentifizierungscode (124) verschlüsselte Authentifizierungsschlüssel (130) ist und das Erzeugen des Authentifizierungsschlüssels (130) das Entschlüsseln des zweiten Authentifizierungscodes (128) mit dem ersten Authentifizierungscode (124) umfasst.

2. Verfahren nach Anspruch 1, mit folgenden Schritten:
- Registrierung des Nutzer (132) an dem Dienst-Computersystem (104),
- Speicherung von Registrierungsdaten, wobei die Registrierungsdaten eine Nutzerkennung enthalten,
- Erstellen des Authentifizierungsschlüssels (130) sowie des ersten und des zweiten Authentifizierungscodes (124, 128),
- Speichern des zweiten Authentifizierungscodes (128) und des Authentifizierungsschlüssels (130) oder des ersten und des zweiten Authentifizierungscodes (124, 128) in einem Speicher (140) des Dienst-Computersystem (104), wobei der zweite Authentifizierungscode (128) und der Authentifizierungsschlüssel (130) bzw. der erste und der zweite Authentifizierungscode (124, 128) der Nutzerkennung zugeordnet sind,
- Aufbringen des ersten Authentifizierungscodes (124) in einer optisch lesbaren Form auf einen Träger (190),
- Senden des Träger (190) an den Nutzer (132),
- Speichern eines Anwendungsprogramms (126) auf dem mobilen Telekommunikationsendgerät (102), wobei das Anwendungsprogramm (126) Programminstruktionen enthält, wobei die Programminstruktionen zum Empfangen und Speichern des ersten und des zweiten Authentifizierungscodes (124, 128) sowie zum Erzeugen des Authentifizierungsschlüssels (130) aus dem ersten und dem zweiten Authentifizierungscode (124, 128) ausgebildet sind,
- Speichern des ersten Authentifizierungscodes (124) in einem gesicherten Speicherbereich (122) des mobilen Telekommunikationsendgeräts (102).

3. Verfahren nach Anspruch 2, wobei die Registrierung des Nutzers mittels eines dem Nutzer zugeordneten ID-Tokens (148) erfolgt, wobei der ID-Token (148) einen nichtflüchtigen elektronischen Speicher (156) mit einem geschützten Speicherbereich (162) aufweist, in dem Attribute gespeichert sind, wobei ein Zugriff auf den geschützten Speicherbereich (156) nur über einen Prozessor (166) des ID-Tokens (148) möglich ist, und wobei der ID-Token (148) eine Kommunikationsschnittstelle (150) zur Kommunikation mit einem Lesegerät (144) eines Nutzer-Computersystems (106) aufweist, wobei das Verfahren die folgenden Schritte aufweist:
- Senden einer Registrierungsanfrage des Nutzers (132) von dem Nutzer-Computersystem (106) über das Netzwerk (110) an das Dienst-Computersystem (104), das mit dem ID-Provider-Computersystem (174) gekoppelt ist,
- Senden einer Attributsspezifikation vom Dienst-Computersystem (104) an das ID-Provider-Computersystem (174) über das Netzwerk (110), wobei die Attributsspezifikation diejenigen Attribute spezifiziert, die das Dienst-Computersystem zur Registrierung des Nutzers (132) benötigt,
- Authentifizierung des Nutzers (132) gegenüber dem ID-Token (148),
- Authentifizierung des ID-Tokens (148) gegenüber dem ID-Provider-Computersystem (174),
- Aufbau eines gesicherten Übertragungskanals mit Ende-zu-Ende-Verschlüsselung zwischen dem ID-Token (148) und dem ID-Provider-Computersystem (174) über das Netzwerk (110),
- Durchführung eines Lesezugriffs des ID-Provider-Computersystems (174) auf den ID-Token (148) zum Lesen der Attribute gemäß der Attributspezifikation aus dem ID-Token (148),
- Übertragung einer in dem Speicherbereich des ID-Tokens (148) gespeicherten Attribute von dem ID-Token (148) an das ID-Provider-Computersystem (174) über den gesicherten Übertragungskanal,
- Ausgabe der aufgrund der Lesezugriffe von dem ID-Provider-Computersystem (174) aus dem ID-Token (148) ausgelesenen Attribute an das Dienst-Computersystem (104),
wobei die Attribute die Adresse enthalten, an die der Träger (190) gesendet wird.

4. Verfahren nach einem der vorhergehenden Ansprüche, wobei das Erzeugen des Authentifizierungsschlüssels (130) das Kombinieren des ersten und des zweiten Authentifizierungscode (124, 128) umfasst.

5. Verfahren nach einem der vorhergehenden Ansprüche, wobei der erste und/oder der zweite Authentifizierungscode (124, 128) mit einer optischen Schnittstelle (112) des mobilen Telekommunikationsendgerätes (102) erfasst werden.

6. Verfahren nach einem der vorhergehenden Ansprüche, wobei der zweite Authentifizierungscode (128) einem mobilen Telekommunikationsendgerät (102) zugeordnet ist, wobei beim Senden einer Nutzerkennung vom Nutzercomputersystem (106) an das Dienstcomputersystem (104) die Gerätekennung des mobilen Telekommunikationsendgeräts (102) an das Dienst-Computersystem (104) gesendet wird, und wobei der der Gerätekennung zugeordnete zweite Authentifizierungscodes (128) an das Nutzer-Computersystem (106) gesendet wird.

7. Verfahren nach einem der vorhergehenden Ansprüche, wobei das mobile Telekommunikationsendgerät (102) eine Gerätekennung aufweist und der Authentifizierungsschlüssel (130) im Dienst-Computersystem (104) einer Gerätekennung des mobilen Telekommunikationsendgerät (102) zugeordnet ist, wobei die Gerätekennung des mobilen Telekommunikationsendgerät (102) mit dem Authentifizierungsschlüssel (130) übermittelt wird und eine Authentifizierung des mobilen Telekommunikationsendgeräts (102) gegenüber dem Dienst-Computersystem (104) mittels des Authentifizierungsschlüssels (130) und der Gerätekennung erfolgt.

8. Verfahren nach einem der vorhergehenden Ansprüche, wobei eine Authentifizierung des Nutzers (132) gegenüber dem Dienst-Computersystem (104) erfolgt, insbesondere mittels eines bei der Registrierung des Nutzers (132) verwendeten ID-Tokens (148), wobei nach der Authentifizierung des Nutzers (132) eine Sperrung einer Gerätekennung und/oder eines Authentifizierungsschlüssels (130) für einen Authentifizierung eines mobilen Telekommunikationsendgerätes (102) durch den Nutzer (132) erfolgt.

9. Mobiles Telekommunikationsendgerät (102) zur Durchführung eines Verfahrens nach einem der vorhergehenden Ansprüche, wobei das mobile Telekommunikationsendgerät (102) eine Schnittstelle (108) für ein öffentliches Netzwerk (110), eine optische Schnittstelle (112) zur Erfassung des ersten und des zweiten Authentifizierungscodes (124, 128) sowie einen Speicher (120) aufweist, wobei der Speicher (120) einen geschützten Speicherbereich (122) aufweist, in dem der erste Authentifizierungscodes (124) gespeichert ist, wobei im Speicher (120) eine Anwendungsprogramm (126) gespeichert ist, das zur Erfassung des ersten und des zweiten Authentifizierungscodes (124, 128), zur Authentifizierung des Nutzers (132), zur Erzeugung des Authentifizierungsschlüssels (130) aus dem ersten und dem zweiten Authentifizierungscode (124, 128) sowie zum Senden des Authentifizierungsschlüssels (130) an das Dienst-Computersystem (104) über das Netzwerk (110) konfiguriert ist.

10. System (100) zur Durchführung eine Verfahrens nach einem der Ansprüche 1 bis 8, mit einem mobilen Telekommunikationsendgerät (102) nach Anspruch 9, einem Nutzer-Computersystem (106) sowie einem Dienst-Computersystem (104), wobei das Dienst-Computersystem (104) eine Schnittstelle (134) für ein öffentliches Netzwerk (110) sowie einen Speicher (140) aufweist, in dem eine Nutzerkennung, Registrierungsdaten, ein zweiter Authentifizierungscode (128) sowie ein Authentifizierungsschlüssel (130) eines Nutzers (132) gespeichert sind, wobei das Dienst-Computersystem (104) ausgebildet ist zum Senden des zweiten Authentifizierungscodes (128) an das Nutzer-Computersystem (106) über das öffentliches Netzwerk (110) sowie zum Empfang des Authentifizierungsschlüssels (130) über ein mobiles Netzwerk vom mobilen Telekommunikationsendgerät (102) sowie zur Authentifizierung des mobilen Telekommunikationsendgeräts (102) mittels des empfangenen Authentifizierungsschlüssels (130).

## Claims

1. A method for authenticating a mobile telecommunication terminal (102) on a service computer system (104) via a public network (110),
the mobile telecommunication terminal (102) comprising a secure memory area (122) in which a first authentication code (124) is stored, and
a second authentication code (128) being stored in the service computer system (104), the second authentication code (128) being assigned to a user identifier,
said method comprising the following steps:
- establishing a network connection between a user computer system (106) and a service computer system (104) via the public network (110);
- authenticating a user with respect to the service computer system (104) via the user computer system (106) and the network connection using a 2-factor authentication, a user identifier being sent from the user computer system (106) to the service computer system (104) via the network connection;
- sending the second authentication code (128) assigned to the user identifier to the user computer system (106) via the network connection;
- displaying the second authentication code (128) to a display device (154) of the user computer system (106);
- authenticating the user (132) with respect to the mobile telecommunication terminal (102) by detecting user-specific information;
- optically detecting the second authentication code (128) by the mobile telecommunication terminal (102) from the user computer system (106);
- generating an authentication key (130) from the first and the second authentication codes (124, 128) by the mobile telecommunication terminal (102);
- establishing a mobile communications connection between the mobile telecommunication terminal (102) and the service computer system (104) via the public network (110); and
- authenticating the mobile telecommunication terminal (102) with respect to the service computer system (102) by means of the authentication key (130) via the mobile communications connection,
wherein the second authentication code (128) is the authentication key (130) encrypted with the first authentication code (124), and the generation of the authentication key (130) comprises the decryption of the second authentication code (128) with the first authentication code (124).

2. The method according to claim 1, comprising the following steps:
- registering the user (132) on the service computer system (104);
- storing registration data, the registration data containing a user identifier;
- creating the authentication key (130) and the first and second authentication codes (124, 128);
- storing the second authentication code (128) and the authentication key (130) or the first and second authentication codes (124, 128) in a memory (140) of the service computer system (104), the second authentication code (128) and the authentication key (130) or the first and second authentication codes (124, 128) being assigned to the user identifier;
- applying the first authentication code (124) in an optically readable form onto a carrier (190);
- sending the carrier (190) to the user (132);
- storing an application program (126) on the mobile telecommunication terminal (102), the application program (126) containing program instructions, the program instructions being designed to receive and store the first and second authentication codes (124, 128) and to generate the authentication key (130) from the first and second authentication codes (124, 128); and
- storing the first authentication key (124) in a secure memory area (122) of the mobile telecommunication terminal (102).

3. The method according to claim 2, the registration of the user taking place by means of an ID token (148) assigned to the user, the ID token (148) comprising a non-volatile electronic memory (156) with a protected memory area (162) in which attributes are stored, with access to the protected memory area (156) being possible only via a processor (166) of the ID token (148)m and the ID token (148) comprising a communication interface (150) for communication with a read device (144) of a user computer system (106), the method comprising the following steps:
- sending a registration inquiry of the user (132) from the user computer system (106) via the network (110) to the service computer system (104) coupled to the ID provider computer system (174);
- sending an attribute specification from the service computer system (104) to the ID provider computer system (174) via the network (110), the attribute specification specifying those attributes that the service computer system requires to register the user (132);
- authenticating the user (132) with respect to the ID token (148);
- authenticating the ID token (148) with respect to the ID provider computer system (174);
- establishing a secure transmission channel having end-to-end encryption between the ID token (148) and the ID provider computer system (174) via the network (110);
- carrying out a read access of the ID provider computer system (174) to the ID token (148) for reading the attributes from the ID token (148) according to the attribute specification;
- transmitting an attribute stored in the memory area of the ID token (148) from the ID token (148) to the ID provider computer system (174) via the secure transmission channel; and
- outputting the attributes read out from the ID token (148) based on the read accesses of the ID provider computer system (174) to the service computer system (104),
wherein the attributes contain the address to which the carrier (190) is sent.

4. The method according to any one of the preceding claims, wherein the generation of the authentication key (130) comprises the combining of the first and second authentication codes (124, 128).

5. The method according to any one of the preceding claims, wherein the first and/or the second authentication codes (124, 128) are detected by means of an optical interface (112) of the mobile telecommunication terminal (102).

6. The method according to any one of the preceding claims, wherein the second authentication code (128) is assigned to a mobile telecommunication terminal (102), the device identifier of the mobile telecommunication terminal (102) being sent to the service computer system (104) when a user identifier is sent from the user computer system (106) to the service computer system (104), and the second authentication code (128) assigned to the device identifier being sent to the user computer system (106).

7. The method according to any one of the preceding claims, wherein the mobile telecommunication terminal (102) comprises a device identifier, and the authentication key (130) in the service computer system (104) is assigned to a device identifier of the mobile telecommunication terminal (102), the device identifier of the mobile telecommunication terminal (102) being transmitted with the authentication key (130), and an authentication of the mobile telecommunication terminal (102) with respect to the service computer system (104) taking place by means of the authentication key (130) and the device identifier.

8. The method according to any one of the preceding claims, wherein an authentication of the user (132) with respect to the service computer system (104) is performed, in particular by means of an ID token (148) used during the registration of the user (132), a device identifier and/or an authentication key (130) for an authentication of a mobile telecommunication terminal (102) being blocked by the user (132) after the user (132) has been authenticated.

9. A mobile telecommunication terminal (102) for carrying out a method according to any one of the preceding claims, wherein the mobile telecommunication terminal (102) comprises an interface (108) for a public network (110), an optical interface (112) for detecting the first and the second authentication codes (124, 128), and a memory (120), the memory (120) having a protected memory area (122), in which the first authentication code (124) is stored, an application program (126) being stored in the memory (120), which application program is configured to detect the first and the second authentication code (124, 128) for authentication of the user (132), to generate the authentication key (130) from the first and the second authentication codes (124, 128), and to send the authentication key (130) to the service computer system (104) via the network (110).

10. A system (100) for carrying out a method according to any one of claims 1 to 8, comprising a mobile telecommunication terminal (102) according to claim 9, a user computer system (106), and a service computer system (104), wherein the service computer system (104) comprises an interface (134) for a public network (110) and a memory (140) in which a user identifier, registration data, a second authentication code (128), and an authentication key (130) of a user (132) are stored, the service computer system (104) being designed to send the second authentication code (128) to the user computer system (106) via the public network (110), and to receive the authentication key (130) via a mobile network from the mobile telecommunication terminal (102), and to authenticate the mobile telecommunication terminal (102) by means of the received authentication key (130).

## Revendications

1. Procédé d'authentification d'un appareil terminal de télécommunications mobile (102) vis-à-vis d'un système informatique de service (104) par le biais d'un réseau public (110),
dans lequel l'appareil terminal de télécommunications mobile (102) présente une zone de mémoire sécurisée (122) dans laquelle un premier code d'authentification (124) est stocké, et
dans lequel un deuxième code d'authentification (128) est stocké dans le système informatique de service (104),
dans lequel le deuxième code d'authentification (128) est associé à un identifiant d'utilisateur,
avec les étapes suivantes :
- l'établissement d'une connexion par réseau entre un système informatique d'utilisateur (106) et un système informatique de service (104) par le biais du réseau public (110),
- l'authentification d'un utilisateur vis-à-vis du système informatique de service (104) par le biais du système informatique d'utilisateur (106) et la connexion par réseau, notamment avec une authentification de facteur 2, où un identifiant d'utilisateur est envoyé du système informatique d'utilisateur (106) au système informatique de service (104) par le biais de la connexion par réseau,
- l'envoi du deuxième code d'authentification (128) associé à l'identifiant d'utilisateur au système informatique d'utilisateur (106) par le biais de la connexion par réseau,
- l'indication du deuxième code d'authentification (128) sur un dispositif d'affichage (154) du système informatique d'utilisateur (106),
- l'authentification de l'utilisateur (132) vis-à-vis de l'appareil terminal de télécommunications mobile (102) par la détection d'informations spécifiques à l'utilisateur,
- la détection optique du deuxième code d'authentification (128) par l'appareil terminal de télécommunications mobile (102) par le système informatique d'utilisateur (106),
- la création d'une clé d'authentification (130) à partir des premier et deuxième codes d'authentification (124, 128) par l'appareil terminal de télécommunications mobile (102),
- l'établissement d'une connexion radio mobile entre l'appareil terminal de télécommunications mobile (102) et le système informatique de service (104) par le biais du réseau public (110),
- l'authentification de l'appareil terminal de télécommunications mobile (102) vis-à-vis du système informatique de service (102) au moyen de la clé d'authentification (130) par le biais de la connexion radio mobile,
dans lequel le deuxième code d'authentification (128) est la clé d'authentification (130) chiffrée avec le premier code d'authentification (124) et la création de la clé d'authentification (130) comprend le déchiffrement du deuxième code d'authentification (128) avec le premier code d'authentification (124).

2. Procédé selon la revendication 1, avec les étapes suivantes :
- l'enregistrement de l'utilisateur (132) au niveau du système informatique de service (104),
- le stockage de données d'enregistrement, où les données d'enregistrement contiennent un identifiant d'utilisateur,
- l'élaboration de la clé d'authentification (130) ainsi que des premier et deuxième codes d'authentification (124, 128),
- le stockage du deuxième code d'authentification (128) et de la clé d'authentification (130) ou des premier et deuxième codes d'authentification (124, 128) dans une mémoire (140) du système informatique de service (104), où le deuxième code d'identification (128) et la clé d'authentification (130), respectivement, les premier et deuxième codes d'authentification (124, 128) sont associés à l'identifiant d'utilisateur,
- la mise en évidence du premier code d'authentification (124) dans une forme lisible optiquement sur un support (190),
- l'envoi du support (190) à l'utilisateur (132),
- le stockage d'un programme d'application (126) sur l'appareil terminal de télécommunications mobile (102), où le programme d'applications (126) contient des instructions de programme, où les instructions de programme sont conçues pour la réception et le stockage des premier et deuxième codes d'authentification (124, 128) ainsi que pour la création de la clé d'authentification (130) à partir des premier et deuxième codes d'authentification (124, 128),
- le stockage du premier code d'authentification (124) dans une zone de mémoire sécurisée (122) de l'appareil terminal de télécommunications (102).

3. Procédé selon la revendication 2, dans lequel l'enregistrement de l'utilisateur a lieu au moyen d'un jeton d'ID (148) associé à l'utilisateur, où le jeton d'ID (148) présente une mémoire électronique non volatile (156) avec une zone de mémoire sécurisée (162), dans laquelle sont stockés des attributs, où un accès à la zone de mémoire sécurisée (156) n'est possible que par le biais d'un processeur (166) du jeton d'ID (148), et où le jeton d'ID (148) présente une interface de communication (150) pour la communication avec un lecteur (144) d'un système informatique d'utilisateur (106), où le procédé présente les étapes suivantes :
- l'envoi d'une demande d'enregistrement de l'utilisateur (132) du système informatique d'utilisateur (106), par le biais du réseau (110), au système informatique de service (104) qui est couplé avec le système informatique fournisseur d'ID (174),
- l'envoi d'une spécification d'attributs du système informatique de service (104) au système informatique fournisseur d'ID (174) par le biais du réseau (110), où la spécification d'attributs spécifie les attributs en question dont a besoin le système informatique de service pour l'enregistrement de l'utilisateur (132),
- l'authentification de l'utilisateur (132) vis-à-vis du jeton d'ID (148),
- l'authentification du jeton d'Id (148) vis-à-vis du système informatique fournisseur d'ID (174),
- l'établissement d'un canal de transmission sécurisé avec un chiffrement de bout en bout entre le jeton d'ID (148) et le système informatique fournisseur d'ID (174) par le biais du réseau (110),
- l'exécution d'un accès en lecture du système informatique fournisseur d'ID (174) dans le jeton d'ID (148) pour la lecture des attributs selon la spécification d'attributs à partir du jeton d'ID (148),
- la transmission de quelques uns des attributs stockés dans la zone de mémoire du jeton d'ID (148) du jeton d'ID (148) au système informatique fournisseur d'ID (174) par le biais du canal de transmission sécurisé,
- la délivrance des attributs lus à partir du jeton d'ID (148) en raison des accès en lecture par le service informatique fournisseur d'ID (174) au système informatique de service (104),
dans lequel les attributs contiennent l'adresse à laquelle est envoyé le support (190).

4. Procédé selon l'une des revendications précédentes, dans lequel la création de la clé d'authentification (130) comprend la combinaison des premier et deuxième codes d'authentification (124, 128).

5. Procédé selon l'une des revendications précédentes, dans lequel les premier et/ou deuxième codes d'authentification (124, 128) sont détectés avec une interface optique (112) de l'appareil terminal de télécommunications mobile (102).

6. Procédé selon l'une des revendications précédentes, dans lequel le deuxième code d'authentification (128) est associé à un appareil terminal de télécommunications mobile (102), où, lors de l'envoi d'un identifiant d'utilisateur du système informatique d'utilisateur (106) au système informatique de service (104), l'identifiant d'appareil de l'appareil terminal de télécommunications mobile (102) est envoyé au système informatique de service (104), et où le deuxième code d'authentification (128) associé à l'identifiant d'appareil est envoyé au système informatique d'utilisateur (106).

7. Procédé selon l'une des revendications précédentes, dans lequel l'appareil terminal de télécommunications mobile (102) présente un identifiant d'appareil et la clé d'authentification (130) dans le système informatique de service (104) est associée à un identifiant d'appareil de l'appareil terminal de télécommunications mobile (102), où l'identifiant d'appareil de l'appareil terminal de télécommunications mobile (102) est transmis avec la clé d'authentification (130) et une authentification de l'appareil terminal de télécommunications mobile (102) a lieu vis-à-vis du système informatique de service (104) au moyen de la clé d'authentification (130) et de l'identifiant d'appareil.

8. Procédé selon l'une des revendications précédentes, dans lequel il y a une authentification de l'utilisateur (132) vis-à-vis du système informatique de service (104), notamment, au moyen d'un jeton d'ID (148) employé lors de l'enregistrement de l'utilisateur (132), où, après l'authentification de l'utilisateur (132), il y a un blocage d'un identifiant d'appareil et/ou d'une clé d'authentification (130) pour une authentification d'un appareil terminal de télécommunications mobile (102) par l'utilisateur (132).

9. Appareil terminal de télécommunications mobile (102) permettant l'exécution d'un procédé selon l'une des revendications précédentes, où l'appareil terminal de télécommunications mobile (102) présente une interface (108) pour un réseau public (110), une interface optique (112) pour la détection des premier et deuxième codes d'authentification (124, 128) ainsi qu'une mémoire (120), où la mémoire (120) présente une zone de mémoire sécurisée (122), dans laquelle est stocké le premier code d'authentification (124), où un programme d'application (126) est stocké dans la mémoire (120) qui est conçu pour la détection des premier et deuxième codes d'application (124, 128), pour l'authentification de l'utilisateur (132), pour la création de la clé d'authentification (130) à partir des premier et deuxième codes d'authentification (124, 128) ainsi que pour l'envoi de la clé d'authentification(130) au système informatique de service (104) par le biais du réseau (110).

10. Système (100) permettant l'exécution d'un procédé selon l'une des revendications 1 à 8, avec un appareil terminal de télécommunications mobile (102) selon la revendication 9, un système informatique d'utilisateur (106) ainsi qu'un système informatique de service (104), où le système informatique de service (104) présente une interface (134) pour un réseau public (110) ainsi qu'une mémoire (140) dans laquelle sont stockés un identifiant d'utilisateur, des données d'enregistrement, un deuxième code d'authentification (128) ainsi qu'une clé d'authentification (130) d'un utilisateur (132), où le système informatique de service (104) est conçu pour l'envoi d'un deuxième code d'authentification (128) au système informatique d'utilisateur (106) par le biais du réseau public (110) ainsi que pour la réception de la clé d'authentification (130) par le biais d'un réseau mobile par l'appareil terminal de télécommunications mobile (102) ainsi que pour l'authentification de l'appareil terminal de télécommunications mobile (102) au moyen de la clé d'authentification (130) reçue.
